# EUROPEAN PATENT SPECIFICATION

(11) **EP 3 330 633 B1**
(45) Date of publication and mention of the grant of the patent: **06.01.2021**
(21) Application number: 16832056.2
(22) Date of filing: 29.01.2016
(51) Int. Cl.: F24H 7/04, F24H 9/20, F24D 17/00, F24D 19/10

(54) **PHASE-CHANGE HEAT STORAGE-TYPE ELECTRIC WATER HEATER**
ELEKTRISCHER WASSERERHITZER VON PHASENWECHSELWÄRMESPEICHERTYP
CHAUFFE-EAU ÉLECTRIQUE DU TYPE À STOCKAGE DE CHALEUR À CHANGEMENT DE PHASE

(30) Priority: 31.07.2015 CN 201520570533 U
(43) Date of publication of application: 06.06.2018
(73) Proprietor: PIONEER ENERGY (JIANGSU) CO., LTD, Bonded Area Zhangjiagang City, Suzhou Jiangsu 215600 (CN)
(72) Inventor: LIU, Haijun, Suzhou Jiangsu 215600 (CN); LI, Wen, Suzhou Jiangsu 215600 (CN); WANG, Hong, Suzhou Jiangsu 215600 (CN)
(74) Representative: Winter, Brandl, Fürniss, Hübner, Röss, Kaiser, Polte - Partnerschaft mbB
(86) International application number: PCT/CN2016/072755
(87) International publication number: WO 2017/020567

(56) References cited:
- WO-A-85/00214
- WO-A1-2009/157630
- CN-A- 101 737 843
- CN-A- 102 654 308
- CN-A- 104 279 610
- CN-A- 104 976 765
- CN-A- 104 990 282
- CN-U- 201 926 120
- CN-U- 203 595 278
- CN-U- 204 902 240
- US-B2- 6 493 507

## Description

### BACKGROUND OF THE INVENTION

### Technical Field

The present invention relates to an electrical water heater, in particular to a phase change heat storage-type electrical water heater.

### 3. Description of the Related Art

Existing energy storage-type electrical water heaters all directly heat water in the water heaters by using electrical heating components to provide users with warm water for living and working use. Due to large heat storage containers, such electrical water heaters have large sizes, large masses, high cost, and when installed indoors, occupy the indoor space of users, thus affecting the installation and use of the heat storage-type electrical water heaters. Moreover, a large amount of water stored in the liners of the heat storage-type electrical water heaters has a certain corrosivity, so the service life is shortened, and bacteria grow and affect health. In addition, the existing heat storage-type electrical water heaters cannot produce warm water at the moment of being turned on, and cannot meet the fast-paced working and living demands of users in the current society.

The Chinese Patent CN 102654308 A discloses a phase change heat storage-type electrical water heater, comprising a water heater housing, wherein the water heater housing is internally provided with an insulating material; the water heater housing contains a plurality of containers inside; the plurality of containers are respectively filled in with phase change materials; heat exchange pipes are embedded in the phase change materials; each one of the heat exchange pipes has one end connected with a water inlet pipe and the other end connected with a water outlet pipe; a water return pipe is connected between the water inlet pipe and the water outlet pipe; the water return pipe is provided with a cycle pump and a water container; the water container is internally equipped with an electrical heater; the recycle pump and the electrical heater are respectively electrically connected with a controller; and the controller is fixed on the water heater housing. The phase change heat storage-type electrical water heater mainly stores heat in advance by using the high heat storage property of the phase change material and therefore can provide users with warm water at any time and any place. Such phase change heat storage-type electrical water heater continuously heats a large amount of warm water for a long time, and is safe and reliable. However, in such patent, the water return pipe, the recycle pump and the water containers are all integrated in the water heater housing, resulting in relatively complicated structural setting, and inconvenient maintenance, removal and replacement.

Document CN 101 737 843 A discloses a phase change heat storage-type electrical water heater according to the preamble of claim 1 and shows a phase-change heat storage can which consists of an electric heating load, a heat storing valve, a heat supplying valve, an electric heater, a circulating pump, a heat medium tube, a jacket, a plastic shell and a phase-change heat storage agent. The heat medium tube and the phase-change heat storage agent are arranged in a plastic can of which the outer layer is provided with the jacket; and the two ends of the heat medium tube are connected with the circulating pump, the electric heater, the heat storing valve, the heat supplying valve and the electric heating load through pipelines. Further, related prior art is disclosed in documents WO 2009/157630 A1 and CN 104 279 610 A.

### BRIEF SUMMARY OF THE INVENTION

The objective of the present invention is to provide a phase change heat storage-type electrical water heater which has a small size, a long service life, and a heat storage density and can provide warm water at the moment of being turned on, to overcome the defects in the prior art.

The objective of the present invention can be achieved by the following technical solution:

A phase change heat storage-type electrical water heater comprising the features as defined in claim 1.

The water outlet pipe is provided with a water flow detector.

The circulating pump, the water flow detector and the electrical heater are connected to the controller at the same time.

The water flow detector is any one or a combination of a water flow switch and a water flow sensor.

The circulating medium backflow pipe is provided with a pressure release valve.

The circulating medium backflow pipe is provided with a phase change material leak detecting device, and the phase change material leak detecting device is any one or a combination of several ones of an aluminum pipe, a zinc pipe, a magnesium pipe and a PH value tester.

The function switching valve is any one or a combination of several ones of a ball valve, an electric pipe or an electromagnetic valve.

The circulating medium is any one or a combination of several ones of tap water, distilled water, anti-freezing liquid and heat conducting oil.

The operation modes of the phase change heat storage electrical water heater according to the invention are classified into an electrical water heater operation mode and a hybrid operation mode of other auxiliary energy sources with the electrical water heater.

Electrical water heater operation mode: refers to an operation state where the function switching valve is opened. When the temperature is lower than a set value, the controller starts the circulating pump and the electrical heater, and the circulating medium circulates in the circulating medium backflow pipe and the heat exchange pipe in a heat accumulating container to pass heat to the heat change material for storage; and when the temperature rises the set value, the circulating pump and the electrical heater stop working. During use of water, after the water flow detector detects a water demand signal from the water outlet pipe on the heat exchanger, the circulating pump opens, and the circulating medium absorbs heat through the phase change material and passes the heat to the tap water through the heat exchanger to heat the tap water, and the users can use warm water. Such function can ensure instant use through time control to provide users with a comfortable use experience.

Hybrid operation mode of other auxiliary energy sources with the electrical water heater: refers to an operation in combination with other auxiliary functions. In such circumstances, the function switching valve is closed, and the circulating system is matched with other energy systems, for example the heat collector. When the temperature at the circulating inlet is higher than a set value, the controller starts the circulating pump, and then the circulating medium circulates in the circulating medium backflow pipe and the auxiliary energy system to pass heat to the phase change material for storage. When the temperature is lower than the set value, the work is stopped. On the end user side, the heat exchanger heats the water and then the user can use warm water. By such function, auxiliary energy sources such as a heat pump and solar energy can be used, and unstable energy sources can be used to achieve the maximum operation efficiency to meet the heat accumulating demands.

Compared with the prior art, the present invention has the following beneficial effects:

1. The phase change heat storage type electrical water heater of the present invention has the advantages of small size, long service life, and comfortable experience along with providing warm water at the moment of being turned on.

2. The phase change heat storage-type electrical water heater of the present invention mainly stores heat in advance by using the high heat storage property of the phase change material and then can provide users with warm water at the moment of being turned on. Such phase change heat storage-type electrical water heater continuously a large amount of warm water for a long time, saves the awaiting time for users, and can meet the fast-paced working and living demands of users.

### BRIEF DESCRIPTION OF THE SEVERAL VIEWS OF THE DRAWINGS

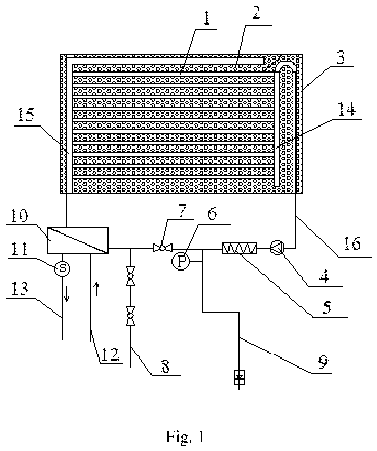

Fig.1 is a structural view of the present invention.

As shown in the figures, 1-heat exchange pipe; 2-phase change material; 3-phase change heat storage device; 4-cycle pump; 5-electrical heater; 6-pressure release valve; 7-function switching valve; 8-circulating medium reserved inflow pipe; 9-circulating medium reserved outflow pipe; 10-heat exchanger; 11-water flow detector; 12-water inlet pipe; 13-water outlet pipe; 14-circulating medium inflow pipe; 15-circulating medium outflow pipe; 16-circulating medium backflow pipe.

### DETAILED DESCRIPTION OF THE INVENTION

The present invention is described in detail in conjunction with the attached drawings and specific embodiments.

### Embodiment

A phase change heat storage-type electrical water heater, as shown in FIG.1, includes a phase change heat storage device 3, wherein the phase change heat storage device 3 includes a housing; the housing is internally filled in with a phase change material 2; a heat exchange pipe 1 is embedded in the phase change material 2; the heat exchange pipe 1 has one end connected with a circulating medium inflow pipe 14 and the other end connected with a circulating medium outflow pipe 15; the circulating medium inflow pipe 14 and the circulating medium outflow pipe 15 are externally connected with a circulating medium backflow pipe 16 there-between; the circulating medium inflow pipe 14, the heat exchange pipe 1, the circulating medium outflow pipe 15 and the circulating medium backflow pipe 16 form a circulating system in which a circulating medium flows, characterized in that, the circulating medium backflow pipe 16 is provided with a circulating pump 4, an electrical heater 5, a function switching valve 7 and a heat exchanger 10 in turn; and the heat exchanger 10 is provided with a water inlet pipe 12 for heating tap water and a water outlet pipe 13. The water outlet pipe 13 is provided with a water flow detector 11. The circulating pump 4, the water flow detector 11 and the electrical heater 5 are connected to a controller at the same time. The circulating medium backflow pipe 16 at the two ends of the function switch valve 7 is respectively provided with a circulating medium reserved inflow pipe 8 and a circulating medium reserved outflow pipe 9 which are externally connected with auxiliary energy sources. The circulating medium backflow pipe 16 is provided with a pressure release valve 6.

According to the present invention, the water flow detector 11 is any one or a combination of a water flow switch and a water flow sensor.

The circulating medium backflow pipe 16 is provided with a phase change material leak detecting device, and the phase change material leak detecting device is any one or a combination of several ones of an aluminum pipe, a zinc pipe, a magnesium pipe and a PH value tester.

The function switching valve 7 is any one or a combination of several ones of a ball valve, an electric pipe or an electromagnetic valve.

The circulating medium is any one or a combination of several ones of tap water, distilled water, anti-freezing liquid and heat conducting oil.

The operation modes of the phase change heat storage electrical water heater in this embodiment are classified into an electrical water heater operation mode and a hybrid operation mode of other auxiliary energy sources with the electrical water heater.

Electrical water heater operation mode: refers to an operation state where the function switching valve is opened. When the temperature is lower than a set value, the controller starts the circulating pump and the electrical heater, and the circulating medium circulates in the circulating medium backflow pipe and the heat exchange pipe in a heat accumulating container to pass heat to the heat change material for storage; and when the temperature rises the set value, the circulating pump and the electrical heater stop working. During use of water, after the water flow detector detects a water demand signal from the water outlet pipe on the heat exchanger, the circulating pump opens, and the circulating medium absorbs heat through the phase change material and passes the heat to the tap water through the heat exchanger to heat the tap water, and the users can use warm water. Such function can ensure instant use through time control to provide users with a comfortable use experience.

Hybrid operation mode of other auxiliary energy sources with the electrical water heater: refers to an operation in combination with other auxiliary functions. In such circumstances, the function switching valve is closed, and the circulating system is matched with other energy systems, for example the heat collector. When the temperature at the circulating inlet is higher than a set value, the controller starts the circulating pump, and then the circulating medium circulates in the circulating medium backflow pipe and the auxiliary energy system to pass heat to the phase change material for storage. When the temperature is lower than the set value, the work is stopped. On the end user side, the heat exchanger heats the water and then the user can use warm water. By such function, auxiliary energy sources such as a heat pump and solar energy can be used, and unstable energy sources can be used to achieve the maximum operation efficiency to meet the heat accumulating demands.

Through the description of the above embodiment, those ordinarily skilled in the art can understand and use the present invention. Obviously, those skilled in the art can easily make various modifications on the embodiments and apply the general principle described here to other embodiments without creative work. Therefore, the present invention is not limited to the above embodiments. All improvements and modifications made within the scope of the present invention by those skilled in the art according to the concept of the present invention should fall within the protective scope of the present invention as defined by the appended claims.

## Claims

1. A phase change heat storage-type electrical water heater, comprising a phase change heat storage device (3), wherein the phase change heat storage device (3) comprises a housing; the housing is internally filled in with a phase change material (2); a heat exchange pipe (1) is embedded in the phase change material (2); the heat exchange pipe (1) has one end connected with a circulating medium inflow pipe (14) and the other end connected with a circulating medium outflow pipe (15); the circulating medium inflow pipe (14) and the circulating medium outflow pipe (15) are connected externally of the housing with a circulating medium backflow pipe (16) there-between; the circulating medium inflow pipe (14), the heat exchange pipe (1), the circulating medium outflow pipe (15) and the circulating medium backflow pipe (16) form a circulating system in which a circulating medium flows, wherein the circulating medium backflow pipe (16) is provided with a circulating pump (4) and an electrical heater (5), **characterized in that**
the circulating medium backflow pipe (16) is further provided with a function switching valve (7) and a heat exchanger (10) in turn;
the heat exchanger (10) is provided with a water inlet pipe (12) for heating tap water and a water outlet pipe (13), and
the circulating medium backflow pipe (16) at both ends of the function switching valve (7) is respectively provided with a circulating medium reserved inflow pipe (8) and a circulating medium reserved outflow pipe (9) which are to be connected, in use, externally of the phase change heat storage-type electrical water heater with auxiliary energy sources, and a controller is provided which is configured to force an electrical water heater operation mode to be executed when the function switching valve is opened, and the controller is configured to force a hybrid operation mode of the auxiliary energy sources with the electrical water heater to be executed when the function switching valve is closed and the circulating system is connected, in use, to the auxiliary energy sources.

2. The phase change heat storage-type electrical water heater according to claim 1, **characterized in that** the water outlet pipe (13) is provided with a water flow detector (11).

3. The phase change heat storage-type electrical water heater according to claim 2, **characterized in that** the circulating pump (4), the water flow detector (11) and the electrical heater (5) are connected to the controller at the same time.

4. The phase change heat storage-type electrical water heater according to claim 2, **characterized in that** the water flow detector (11) is any one or a combination of a water flow switch and a water flow sensor.

5. The phase change heat storage-type electrical water heater according to claim 1, **characterized in that** the circulating medium backflow pipe (16) is provided with a pressure release valve (6).

6. The phase change heat storage-type electrical water heater according to claim 1, **characterized in that** the circulating medium backflow pipe (16) is provided with a phase change material leak detecting device, and the phase change material leak detecting device is any one or a combination of several ones of an aluminum pipe, a zinc pipe, a magnesium pipe and a PH value tester.

7. The phase change heat storage-type electrical water heater according to claim 1, **characterized in that** the function switching valve (7) is any one or a combination of several ones of a ball valve, an electric pipe or an electromagnetic valve.

8. The phase change heat storage-type electrical water heater according to claim 1, **characterized in that** the circulating medium is any one or a combination of several ones of tap water, distilled water, anti-freezing liquid and heat conducting oil.

## Patentansprüche

1. Elektrischer Wassererhitzer vom Phasenwechsel-Wärmespeichertyp, mit einer Phasenwechsel-Wärmespeichervorrichtung (3), wobei die Phasenwechsel-Wärmespeichervorrichtung (3) ein Gehäuse umfasst; das Gehäuse innen mit einem Phasenwechselmaterial (2) gefüllt ist; eine Wärmetauscherleitung (1) in das Phasenwechselmaterial (2) eingebettet ist; die Wärmetauscherleitung (1) ein Ende, das mit einer Zirkulationsmedium-Zuflussleitung (14) verbunden ist, und das andere Ende aufweist, das mit einer Zirkulationsmedium-Abflussleitung (15) verbunden ist; die Zirkulationsmedium-Zuflussleitung (14) und die Zirkulationsmedium-Abflussleitung (15) außerhalb des Gehäuses mit einer dazwischenliegenden Zirkulationsmedium-Rückflussleitung (16) verbunden sind; die Zirkulationsmedium-Zuflussleitung (14), die Wärmetauscherleitung (1), die Zirkulationsmedium-Abflussleitung (15) und die Zirkulationsmedium-Rückflussleitung (16) ein Zirkulationssystem bilden, in dem ein Zirkulationsmedium fließt, wobei die Zirkulationsmedium-Rückflussleitung (16) mit einer Zirkulationspumpe (4) und einem elektrischen Erhitzer (5) versehen ist, **dadurch gekennzeichnet, dass**
die Zirkulationsmedium-Rückflussleitung (16) ferner wiederum mit einem Funktionsschaltventil (7) und einem Wärmetauscher (10) versehen ist;
der Wärmetauscher (10) mit einer Wassereinlassleitung (12) zum Erwärmen von Leitungswasser und einer Wasserauslassleitung (13) versehen ist, und
die Zirkulationsmedium-Rückflussleitung (16) an beiden Enden des Funktionsschaltventils (7) jeweils mit einer Zirkulationsmedium-Reserviert-Zuflussleitung (8) und einer Zirkulationsmedium-Reserviert-Abflussleitung (9) versehen ist, die im Betrieb außerhalb des elektrischen Wassererhitzers vom Phasenwechsel-Wärmespeichertyp mit Zusatzenergiequellen anzuschließen sind, und eine Steuerung vorgesehen ist, die so konfiguriert ist, dass sie die Ausführung eines Betriebsmodus des elektrischen Wassererhitzers erzwingt, wenn das Funktionsschaltventil geöffnet ist, und die Steuerung so konfiguriert ist, dass sie die Ausführung eines Hybridbetriebsmodus der Zusatzenergiequellen mit dem elektrischen Wassererhitzer erzwingt, wenn das Funktionsschaltventil geschlossen ist und das Zirkulationssystem im Betrieb an die Zusatzenergiequellen angeschlossen ist.

2. Elektrischer Wassererhitzer vom Phasenwechsel-Wärmespeichertyp nach Anspruch 1, **dadurch gekennzeichnet, dass** die Wasserauslassleitung (13) mit einem Wasserdurchflussdetektor (11) versehen ist.

3. Elektrischer Wassererhitzer vom Phasenwechsel-Wärmespeichertyp nach Anspruch 2, **dadurch gekennzeichnet, dass** die Zirkulationspumpe (4), der Wasserdurchflussdetektor (11) und der elektrische Erhitzer (5) gleichzeitig mit der Steuerung verbunden sind.

4. Elektrischer Wassererhitzer vom Phasenwechsel-Wärmespeichertyp nach Anspruch 2, **dadurch gekennzeichnet, dass** der Wasserflussdetektor (11) ein Wasserdurchflussschalter oder ein Wasserdurchflusssensor oder eine Kombination aus diesen ist.

5. Elektrischer Wassererhitzer vom Phasenwechsel-Wärmespeichertyp nach Anspruch 1, **dadurch gekennzeichnet, dass** die Zirkulationsmedium-Rückflussleitung (16) mit einem Druckablassventil (6) versehen ist.

6. Elektrischer Wassererhitzer vom Phasenwechsel-Wärmespeichertyp nach Anspruch 1, **dadurch gekennzeichnet, dass** die Zirkulationsmedium-Rückflussleitung (16) mit einer Phasenwechsel-Materialleckagen-Erfassungsvorrichtung versehen ist, und die Phasenwechsel-Materialleckagen-Erfassungsvorrichtung eine Aluminiumleitung oder eine Zinkleitung oder eine Magnesiumleitung oder ein PH-Wert-Prüfgerät oder eine Kombination von mehreren aus diesen ist.

7. Elektrischer Wassererhitzer vom Phasenwechsel-Wärmespeichertyp nach Anspruch 1, **dadurch gekennzeichnet, dass** das Funktionsschaltventil (7) ein Kugelventil, eine elektrische Leitung oder ein elektromagnetisches Ventil oder eine Kombination von mehreren aus diesen ist.

8. Elektrischer Wassererhitzer vom Phasenwechsel-Wärmespeichertyp nach Anspruch 1, **dadurch gekennzeichnet, dass** das Zirkulationsmedium Leitungswasser oder destilliertes Wasser oder Frostschutzmittel oder Wärmeleitöl oder eine Kombination von mehreren aus diesen ist.

## Revendications

1. Chauffe-eau électrique de type à stockage de chaleur à changement de phase, comprenant un dispositif de stockage de chaleur à changement de phase (3), dans lequel le dispositif de stockage de chaleur à changement de phase (3) comprend un logement ; le logement est rempli, à l'intérieur de celui-ci, d'un matériau à changement de phase (2) ; un tuyau d'échange de chaleur (1) est intégré dans le matériau à changement de phase (2) ; le tuyau d'échange de chaleur (1) a une extrémité reliée à un tuyau d'entrée de milieu de circulation (14) et l'autre extrémité reliée à un tuyau de sortie de milieu de circulation (15) ; le tuyau d'entrée de milieu de circulation (14) et le tuyau de sortie de milieu de circulation (15) sont reliés à l'extérieur du logement à un tuyau de refoulement de milieu de circulation (16) entre eux ; le tuyau d'entrée de milieu de circulation (14), le tuyau d'échange de chaleur (1), le tuyau de sortie de milieu de circulation (15) et le tuyau de refoulement de milieu de circulation (16) forment un système de circulation dans lequel s'écoule un milieu de circulation, dans lequel le tuyau de refoulement de milieu de circulation (16) est pourvu d'une pompe de circulation (4) et d'un réchauffeur électrique (5), **caractérisé en ce que**
le tuyau de refoulement de milieu de circulation (16) est en outre pourvu d'une vanne de commutation de fonction (7) et d'un échangeur de chaleur (10) à son tour ;
l'échangeur de chaleur (10) est pourvu d'un tuyau d'entrée d'eau (12) pour chauffer une eau de robinet et d'un tuyau de sortie d'eau (13), et
le tuyau de refoulement de milieu de circulation (16) aux deux extrémités de la vanne de commutation de fonction (7) est respectivement pourvu d'un tuyau d'entrée réservée de milieu de circulation (8) et d'un tuyau de sortie réservée de milieu de circulation (9) qui doivent être reliés, en utilisation, à l'extérieur du chauffe-eau électrique de type à stockage de chaleur à changement de phase à des sources d'énergie auxiliaires, et il est prévu un organe de commande qui est configuré pour forcer l'exécution d'un mode de fonctionnement de chauffe-eau électrique à l'ouverture de la vanne de commutation de fonction, et l'organe de commande est configuré pour forcer l'exécution d'un mode de fonctionnement hybride des sources d'énergie auxiliaires avec le chauffe-eau électrique lorsque la vanne de commutation de fonction est fermée et le système de circulation est relié, en utilisation, aux sources d'énergie auxiliaires.

2. Chauffe-eau électrique de type à stockage de chaleur à changement de phase selon la revendication 1, **caractérisé en ce que** le tuyau de sortie d'eau (13) est pourvu d'un détecteur de débit d'eau (11).

3. Chauffe-eau électrique de type à stockage de chaleur à changement de phase selon la revendication 2, **caractérisé en ce que** la pompe de circulation (4), le détecteur de débit d'eau (11) et le réchauffeur électrique (5) sont reliés en même temps à l'organe de commande.

4. Chauffe-eau électrique de type à stockage de chaleur à changement de phase selon la revendication 2, **caractérisé en ce que** le détecteur de débit d'eau (11) est l'un quelconque ou une combinaison d'un commutateur de débit d'eau et d'un capteur de débit d'eau.

5. Chauffe-eau électrique de type à stockage de chaleur à changement de phase selon la revendication 1, **caractérisé en ce que** le tuyau de refoulement de milieu de circulation (16) est pourvu d'une vanne de détente de pression (6).

6. Chauffe-eau électrique de type à stockage de chaleur à changement de phase selon la revendication 1, **caractérisé en ce que** le tuyau de refoulement de milieu de circulation (16) est pourvu d'un dispositif de détection de fuite de matériau à changement de phase, et le dispositif de détection de fuite de matériau à changement de phase est l'un quelconque ou une combinaison de plusieurs parmi un tuyau d'aluminium, un tuyau de zinc, un tuyau de magnésium et un testeur de valeur de pH.

7. Chauffe-eau électrique de type à stockage de chaleur à changement de phase selon la revendication 1, **caractérisé en ce que** la vanne de commutation de fonction (7) est l'un quelconque ou une combinaison de plusieurs parmi une vanne à bille, un tuyau électrique ou une vanne électromagnétique.

8. Chauffe-eau électrique de type à stockage de chaleur à changement de phase selon la revendication 1, **caractérisé en ce que** le milieu de circulation est l'un quelconque ou une combinaison de plusieurs parmi une eau de robinet, une eau distillée, un liquide antigel et une huile thermoconductrice.
